# EUROPEAN PATENT SPECIFICATION

(11) **EP 4 232 969 B1**
(45) Date of publication and mention of the grant of the patent: **10.06.2026**
(21) Application number: 20837977.6
(22) Date of filing: 17.12.2020
(51) Int. Cl.: G06N 20/00, G06Q 10/04, G06Q 10/06, G06Q 50/06, G06N 20/10, G06N 20/20, G06N 5/01, G06N 7/01, G06Q 10/0631, G06Q 10/0639

(54) **LOAD FORECASTING FOR ELECTRICAL EQUIPMENT USING MACHINE LEARNING**
LASTVORHERSAGE FÜR ELEKTRISCHE AUSRÜSTUNG UNTER VERWENDUNG VON MASCHINENLERNEN
PRÉVISION DE CHARGE POUR UN ÉQUIPEMENT ÉLECTRIQUE À L'AIDE DE L'APPRENTISSAGE AUTOMATIQUE

(30) Priority: 27.11.2020 US 202063118828 P
(43) Date of publication of application: 30.08.2023
(73) Proprietor: Hitachi Energy Ltd, 8050 Zürich (CH)
(72) Inventor: CHEIM, Luiz, Raleigh, North Carolina 27603 (US)
(74) Representative: Vossius & Partner Patentanwälte Rechtsanwälte mbB
(86) International application number: PCT/EP2020/086740
(87) International publication number: WO 2022/111841

(56) References cited:
- CN-A- 102 427 218
- CN-A- 106 874 534
- CN-A- 108 664 682
- SYBEL TILL ET AL: "Transformer monitoring according to IEC 60354", 30 June 2007 (2007-06-30), pages 1 - 8, XP055820197, Retrieved from the Internet <URL:https://www.a-eberle.de/wp-content/uploads/2021/03/SP_Transformer_EN.pdf> [retrieved on 20210701]

## Description

### BACKGROUND

The present disclosure relates to analysis of electrical equipment, such as high voltage transformers. In particular, the present disclosure relates to load forecasting for electrical equipment using machine learning.

Conventional load forecasting techniques for electrical equipment, such as transformers for example, typically uses complex statistical tools to estimate short term and long term forecasts for load, hot-spot temperature, overload capacity, and other parameters. These tools, such as auto-regressive integrated moving average (ARIMA), may break a time series of historical load data into several components, such as a trend component, a seasonal variation component, a random variation component, etc., to arrive at complex models that aggregate these several components into a final forecast. To reduce prediction error, these tools may also incorporate additional correlated parameters, such as daily average temperature, seasonality, festivals and sports events, etc., which adds additional complexity and may require specialized tools and may require specialized data for different times and regions, e.g., in countries or regions with different cultures, holidays, climates, etc.

In the case of transformers, for example, it may be desirable to obtain an accurate estimate of the load for future times, such as one hour or two hours in the future, in order to plan for load shedding, overload needs for contingencies, and eventual removal of the transformer from operation based on transformer age and remaining life or changing needs of the power system. Due to the complexity of existing solutions, however, many types of electrical equipment lack the computing power required to accurately estimate future loads. CN102427218A relates to an Al-based system for the evaluation of transformer overload capability (which is directly linked to power load and temperature). The document also notes that the Al is trained using historic data, but fails to disclose details of how the training data is used or, more importantly, that several different models are trained, evaluated and that the best performing model is picked from the several models.

### SUMMARY

According to some embodiments, a method includes predicting, by a processor circuit, a load parameter value of an electrical equipment for a future time based on at least one machine learning model and a plurality of load parameter values comprising a set of predefined number of load parameter values extracted from a time series data stream of load parameter values obtained for the electrical equipment. The method further includes calculating, by the processor circuit, an overload capability for the future time based on the predicted load parameter value. The method further includes changing, by the processor circuit, at least one parameter associated with the electrical equipment at the present time based on the calculated overload capability for the future time.

According to some embodiments, the at least one machine learning model is trained based on a plurality of determined relationships between a predefined number of load parameter values and at least one subsequent load parameter value from a time series data stream obtained for a predetermined period of time.

According to some embodiments, the plurality of determined relationships is validated based on a comparison of at least one expected load parameter value derived from the predefined number of load parameter values and the at least one subsequent load parameter value.

According to some embodiments, predicting the load parameter value for the future time is made successively using the predefined number of load parameter values as an input set to the at least one machine learning model. The input set is successively generated with a moving window technique from the time series data stream of load parameter values.

According to some embodiments, the plurality of load parameter values includes a set of at least five load parameter values iteratively extracted from a stream of load parameter values obtained from the electrical equipment.

According to some embodiments, the future time for the predicted load parameter value is at least one hour after the predicting.

According to some embodiments, the at least one machine learning model predicts the load parameter value of the electrical equipment for the future time based only on the plurality of load parameter values.

According to some embodiments, the at least one machine learning model predicts the load parameter value of the electrical equipment for the future time based on the plurality of load parameter values and at least one temperature parameter associated with the electrical equipment.

According to some embodiments, the method further includes predicting, by the processor circuit, at least one hot-spot temperature value for a component of the electrical equipment for the future time based on the predicted load parameter value.

According to some embodiments, the method further includes predicting, by the processor circuit, at least one overload capacity value for the electrical equipment based on the predicted load parameter value, the at least one overload capacity value associated with at least one time period subsequent to the future time.

According to some embodiments, the electrical equipment includes a transformer, and the method further includes operating the transformer based at least in part on the at least one changed parameter.

According to some embodiments, operating the transformer includes operating at least one cooling component of the transformer in response to the predicted load parameter value to change a temperature of at least one component of the electrical equipment prior to the future time.

According to some embodiments, a monitoring device includes a processor circuit and a memory comprising machine readable instructions. When executed by the processor circuit, the machine readable instructions cause the processor circuit to predict a load parameter value of an electrical equipment for a future time based on at least one machine learning model and a plurality of load parameter values comprising a set of predefined number of load parameter values extracted from a time series data stream of load parameter values obtained for the electrical equipment. The machine readable instructions further cause the processor circuit to calculate an overload capability for the future time based on the predicted load parameter value. The machine readable instructions further cause the processor circuit to change at least one parameter associated with the electrical equipment at the present time based on the calculated overload capability for the future time.

According to some embodiments, the at least one machine learning model is trained based on a plurality of determined relationships between a predefined number of load parameter values and at least one subsequent load parameter value from a time series data stream obtained for a predetermined period of time.

According to some embodiments, the plurality of load parameter values comprises a set of at least five load parameter values iteratively extracted from a stream of load parameter values obtained from the electrical equipment.

According to some embodiments, the future time for the predicted load parameter value is at least one hour after the predicting.

According to some embodiments, a non-transitory computer readable medium includes instructions that, when executed by a processor circuit, cause the processor circuit to predict a load parameter value of an electrical equipment for a future time based on at least one machine learning model and a plurality of load parameter values comprising a set of predefined number of load parameter values extracted from a time series data stream of load parameter values obtained for the electrical equipment. The instructions further cause the processor circuit to calculate an overload capability for the future time based on the predicted load parameter value. The instructions further cause the processor circuit to change at least one parameter associated with the electrical equipment at the present time based on the calculated overload capability for the future time.

According to some embodiments, the at least one machine learning model is trained based on a plurality of determined relationships between a predefined number of load parameter values and at least one subsequent load parameter value from a time series data stream obtained for a predetermined period of time.

According to some embodiments, the plurality of load parameter values comprises a set of at least five load parameter values iteratively extracted from a stream of load parameter values obtained from the electrical equipment.

According to some embodiments, the future time for the predicted load parameter value is at least one hour after the predicting.

### BRIEF DESCRIPTION OF THE DRAWINGS

The accompanying drawings, which are included to provide a further understanding of the disclosure and are incorporated in a constitute a part of this application, illustrate certain non-limiting embodiments of inventive concepts. In the drawings:
Figure 1 illustrates a flat file for use by machine learning applications for iterative application of multivariable algorithms, according to some embodiments;
Figures 2A and 2B illustrate conversion of a single variable dataset representing historical load data into a flattened dataset for use with machine learning algorithms in predicting future loads for electrical equipment, according to some embodiments;
Figure 3 illustrates operations for training and selection of machine learning models to predict future loads for electrical equipment based on historical load data, according to some embodiments;
Figure 4 illustrates a visualization of operations of Figure 3 on a training and validation dataset for machine learning models, according to some embodiments;
Figures 5A-5C are graphical plots illustrating comparisons of actual load over time for an electrical equipment and predicted load over time using machine learning models, according to some embodiments;
Figure 6 is a flowchart of operations for predicting load parameter values for a future time based on historical load data, according to some embodiments;
Figure 7 is a graphical plot illustrating a historical load over time, a predicted load for a future time, and determined future overload capacities using operations of Figure 6, according to some embodiments; and
Figure 8 is a block diagram illustrating a load forecasting system for performing operations according to some embodiments.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

Transformer overload capacity may be estimated for a current time based on existing dynamic thermal models and current ambient temperature and load conditions, which allow the continual calculation of hot-spot temperature and resulting life consumption. For the calculation of the overload capability for a given future time interval, models may assume is that hot-spot temperature will not surpass a given limit (e.g., 110C for thermally upgraded Kraft paper and 98C for normal Kraft paper) to avoid unnecessarily shortening the operational life of the transformer. Based on the current condition of the transformer, an optimal "k" load factor may be calculated that allows the transformer to be overloaded at different levels for different corresponding times without sacrificing life.

Accurately predicting a future load value can help in effective load management for power equipment and transmission/distribution lines in a power system, e.g., in a power system, load management by redistribution of load can be done if there is overload capacity with load bearing equipment in response to an equipment failure in a parallel distribution line, and can also be used to prepare an electrical equipment to effectively deal with a future condition, e.g., providing sufficient cooling in advance of an anticipated overload condition to extend the amount of time the electrical equipment can be safely overloaded, or reducing cooling in anticipation of a reduction in demand. This is useful in larger transformers, where cooling can be a time consuming process.

According to embodiments of the disclosure, a future load for a transformer may be accurately estimated using a relatively small set of historical load data to train machine learning models and efficiently select machine learning models with the highest accuracy for different electrical equipment. In some embodiments, the future load can be accurately estimated without any other external information, such as holidays, sporting events, time of year, etc. One advantage of this approach is that the complexity of the model is greatly reduced, allowing a greater variety of electrical and/or computing equipment to employ the model and reducing dependency on higher powered computing equipment, which may be located remotely and difficult to access.

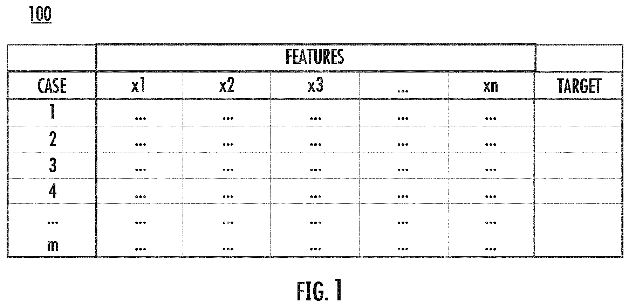

Many machine learning applications (e.g., supervised learning problems) work on the basis of a flat file or a stream of sampled data. In this regard, Figure 1 illustrates an example of a flat file 100 for use by machine learning applications to iteratively apply multivariate regression algorithms to each row 1 - m, using columns x1 - xn as inputs and the final column as a target output, to determine and refine the algorithm over time.

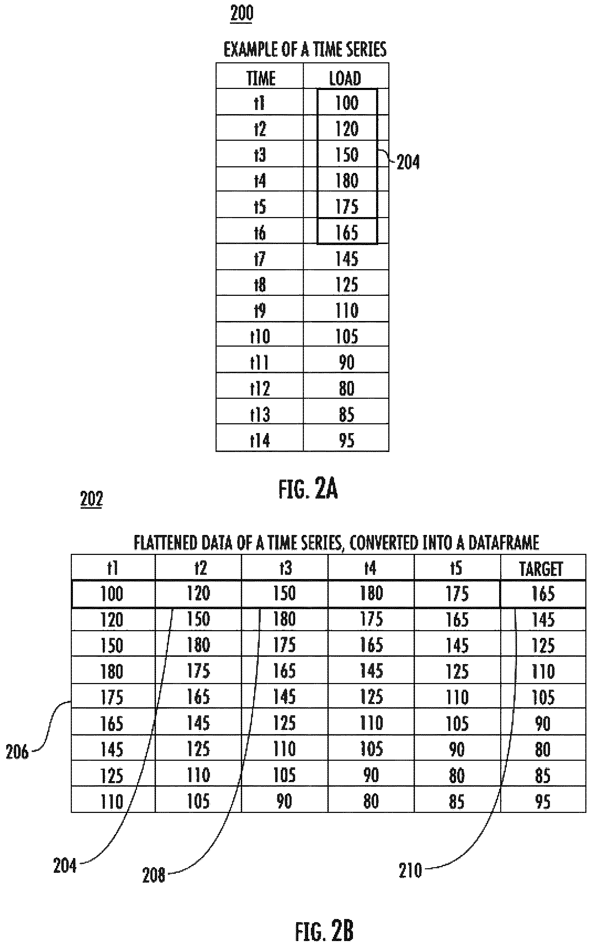

As shown by Figures 2A and 2B, a single variable dataset 200 (a time series of load vs. time in this example) can be converted into a multi-variable flattened dataset 202. In this simplified example, the single variable dataset 200 provides fourteen consecutive load values 204 at times t1 -t14, and each row 206 of the flattened dataset 202 uses a sequence of five consecutive load values 204 as inputs 208 to model the next load value in the sequence, i.e., the target value 210, so that each row 206 of the flattened dataset 202 uses a sequence (e.g., a "moving window") of six consecutive load values 204. It should be understood, however, that the choice of the number of variables (i.e., predictors) will depend on each individual problem. The number of variables in each row 206 can be determined and optimized based on additional testing, e.g., for sensitivity, model accuracy, hardware and software constraints, and other parameters.

To convert the single variable dataset 200 into the flattened dataset 202, the first row 206 of the flattened dataset is populated with the load values 204 at times t1- t6 from the single variable dataset 200, the second row 206 is populated with the load values 204 at times t2 - t7, and so on to populate nine rows 206 of the flattened dataset, with the ninth row 206 being populated with the last six load values 204 at times t9 - t14. In this manner, the vertical single variable dataset 200 is converted into a multi-variable flattened dataset in a tabular format suitable for use with many types of machine learning models.

One advantage of this data transformation technique is the conversion of a single variable dataset (e.g., load against time) into a multivariate problem, which facilitates the use of many machine learning models suitable for regression or classification applications. The power of such machine learning models is in the fact that they can "learn" from large datasets containing a large number of cases (or examples) and also a large number of features (or predictors, or independent variables). In this example, the machine learning models perform a regression-type prediction to predict a real number as the target value 210, but in other examples, a classification type prediction may be performed to predict a categorical target, such as "good or bad", "yes or no", levels 1,2,3, etc.

One advantage of using these and other machine learning techniques with transformer load data is that these techniques provide very high accurate prediction of future load based on relatively small single variable datasets of historical load over time, without the need for any other external parameters such as temperature, holidays, events, etc.

In some embodiments, many different machine learning models (e.g., linear and nonlinear algorithms) are trained using the flattened data, and the results are compared to determine the machine learning model with the highest accuracy. Many different criteria may be used to determine accuracy, such as root mean square error (RMSE), Mean Absolute Error (MAE), etc. Examples of suitable linear machine learning models may include general linear regression, logistic regression (e.g., for classification), linear discriminant analysis, etc. Examples of suitable non-linear machine learning models may include classification and regression trees, naïve-Bayesian, K-nearest neighbor, support vector machines, etc. Examples of suitable ensemble machine learning models may include random forest, tree-bagging, extreme gradient boosting machine, artificial neural networks, etc.

In one illustrative example, a large dataset of approximately 120,000 load data points was used to train and test different machine learning models. The dataset represented hourly load data collected over a period of several years. In this example, the load data was divided into a set of training data (containing 80% of the data) and validation data (containing the remaining 20% of the data). The training data was converted to a flat file having 25 columns (i.e., 24 input variables and one target variable). Various machine learning models were then trained using the training data. After training, the validation data was similarly converted to a 25-column flat file, with the target column removed. After predicting target values for the validation data, the predicted values were compared to the actual target values. The process was then repeated so that variance in how the machine learning models processed the data could be incorporated into the results, which were able to predict short term loads over the next 1-2 hours with high accuracy.

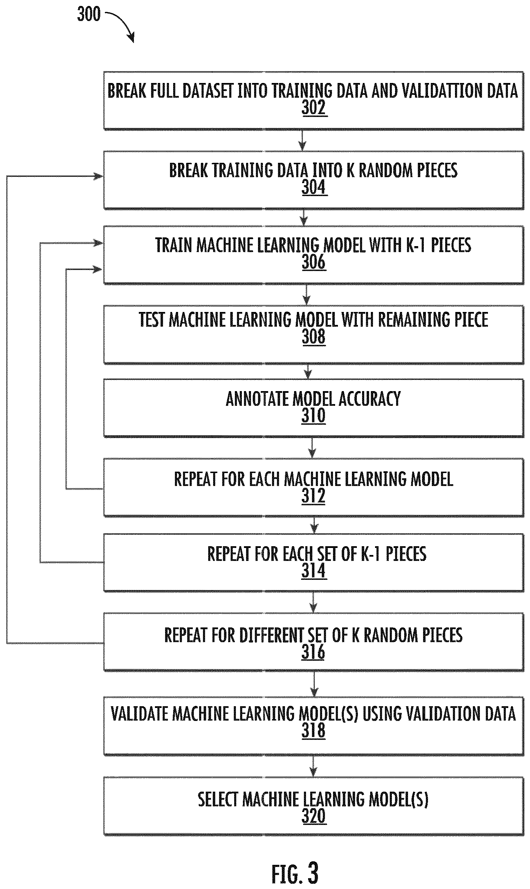

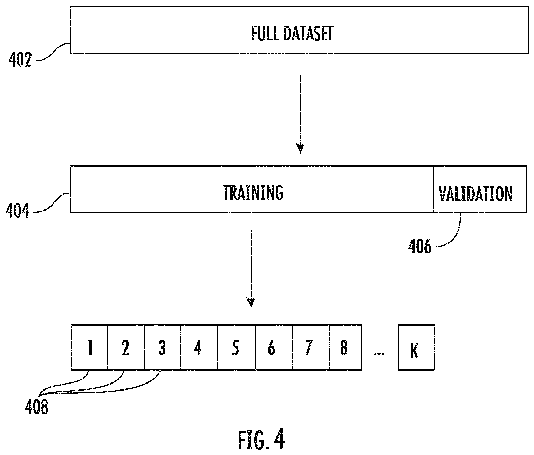

In one example, Figure 3 illustrates operations 300 for training and selection of machine learning models to predict future loads for electrical equipment based on historical load data. Reference will also be made with to Figure 4, which illustrates a visualization of operations 300 of Figure 3 on a training and validation dataset 402 for machine learning models.

The operations 300 of Figure 3 include breaking a full dataset into training data and validation data (Block 302). For example, in Figure 4, the dataset 402 is separated into training data 404 (e.g., 80%) and validation data 406 (e.g., 20%). The operations further include breaking the training data into K random pieces (Block 304). For example, the training data 404 of Figure 4 is broken into K equally sized pieces 408 (e.g., 10 pieces for the purposes of this example).

Next, a machine learning model is trained with K-1 pieces of the training data (Block 306), and validated using the remaining piece of the training data (Block 308). The accuracy of the model is annotated (Block 310), and the process is repeated for multiple different machine learning models (Block 312). For example, in Figure 4, nine of the ten pieces 408 (e.g., pieces 1-9) are used to train each machine learning model and the last piece 408 (e.g., piece 10) is used to test the accuracy of each trained machine learning model, with each piece 408 of the training data 404 being reserved for testing once per machine learning model.

Operations 306-310 are then repeated for each set of K-1 pieces (Block 314), for a total of K training and testing operations for each machine learning model (e.g., 10 times per machine learning model for each combination of 9 pieces 408 in Figure 4). Operations 304-314 are then repeated for a different set of random K pieces of the training data (Block 316), to obtain independent results. For example, repeating the operations 306-310 a total of three times for the training data 404 of Figure 4 would result in a total of 30 training operations in this example. The operations 300 further include validating the trained machine learning models using the validation data (e.g., validation data 406 of Figure 4), and selecting the most accurate machine learning model(s) for use in predicting future loads.

These operations 300 of Figure 3 have the advantage of minimizing "overtraining," in which a given model processes the same data a large number of times and attaches too much weight to the training data such that, when confronted with the training data again, its output is almost 100% correct. This means that the model has almost "no bias" regarding the training set and is considered to be "over-trained". When confronted with new, unseen data, the overtrained model may provide bad results because it can only perfectly represent the training data but not new, unseen data. In general, it can often be more desirable for a trained machine learning to have strong generalization capability, even at the expense of perfect accuracy with respect to training data.

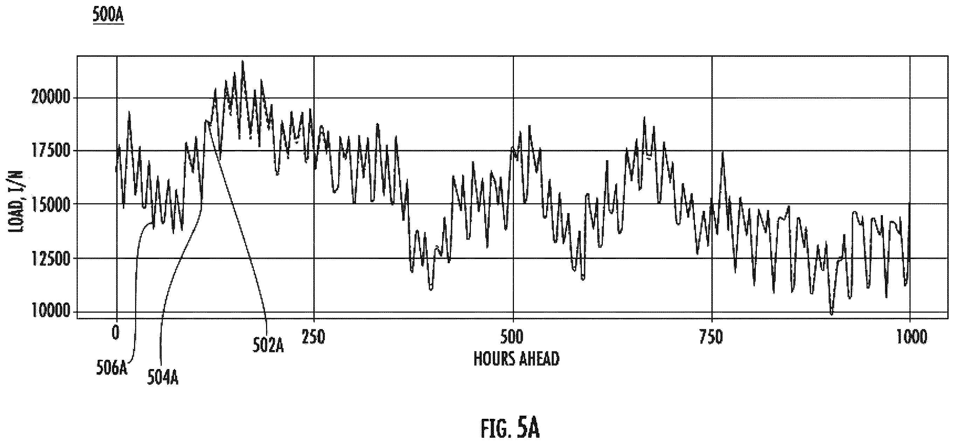

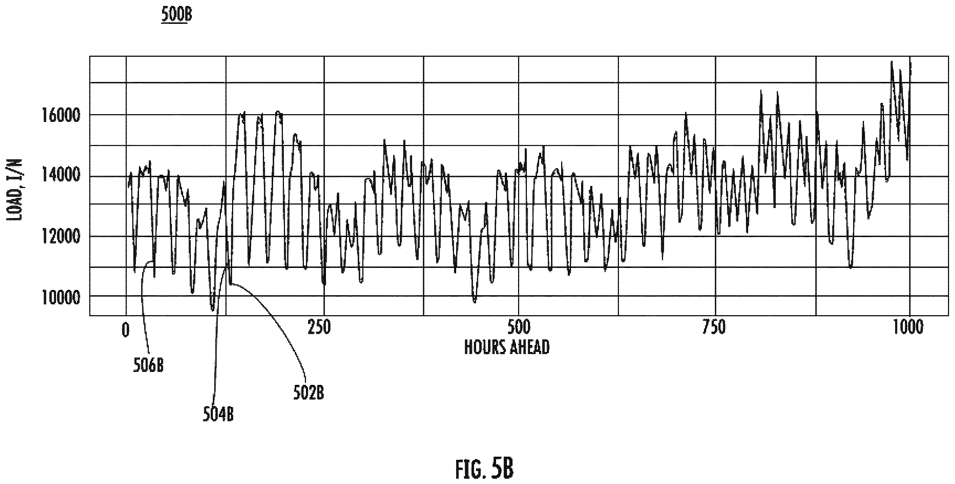

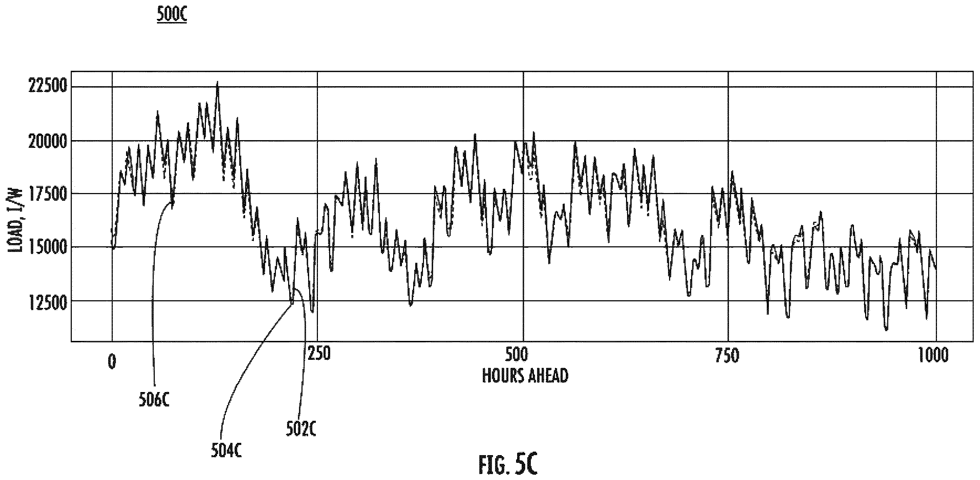

Referring now to Figures 5A-5C, graphical plots 500A-500C illustrate comparisons of actual load values 502A-502C (solid lines) over time for an electrical equipment and predicted load values 504A-504C (dashed lines) over time using machine learning models that have been trained and selected using the operations 300 of Figure 3. In this example, data sets of actual load values 502A-502C from three different 1000 hour periods were selected from a large validation dataset covering thousands of hours of load data for a transformer. Each data set of actual load values 502A-502C was used to train machine learning models to predict a predicted load values 504A-504C over time for each respective set of actual load values 502A-502C with a high degree of accuracy. Notably, each set of predicted load values 504A-504C in this example was independently derived from each respective set of actual load values 502A-502C without retraining or otherwise incorporating results from the other training examples. Despite the large variations between the different sets of actual load values 502A-502C, all three sets of predicted load values 504A-504C exhibited high accuracy. For example, the actual load values 502A of Figure 5A vary between approximately 11250 MW and 21250 MW, the actual load values 502A of Figure 5B vary between approximately 10000 MW and 17000 MW, and the actual load values 502C of Figure 5C vary between approximately 12500 MW and 22500 MW. Despite the high variance between the different sets of actual load values 502A-502C, the respective predicted loads 504A all provided a mean prediction error of between 1.13% and 1.26%, with 90% of the all of the predicted load values 504A-504C providing an error rate of less than 2.55%. As a result, machine learning models trained and selected using embodiments disclosed herein, including the operations 300 of Figure 3 for example, can provide predicted load values 504A-504C, and particularly short term predicted loads 506A-506C, with high accuracy.

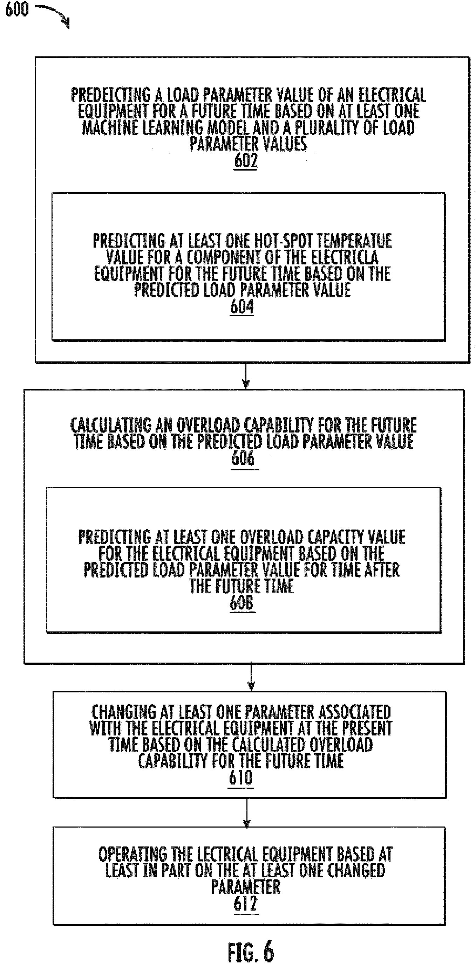

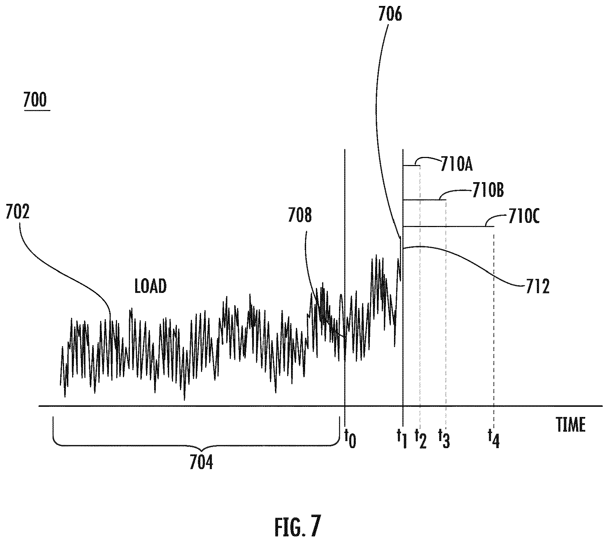

Referring now to Figure 6, flowcharts of operations 600 for predicting load parameter values for a future time based on historical load data are illustrated. Reference will also be made with to Figure 7, which is a graphical plot 700 illustrating a load 702 over time, a predicted load parameter value 706 for a future time, and determined future overload capacities 710A-710C using operations of Figure 6.

The operations 600 include predicting a load parameter value of an electrical equipment for a future time based on at least one machine learning model and a plurality of load parameter values (Block 602). In this example, the plurality of load parameter values is obtained by sampling values with a continuous moving window on a time series data stream of load parameter values. Thus, the plurality of load parameter values includes a set of predefined number of load parameter values (e.g., a predetermined window size such as moving window of five consecutive load values 204 described above with respect to Figures 2A and 2B) extracted from a time series data stream of load parameter values obtained for the electrical equipment. For example, as shown by Figure 7, one or more machine learning models, e.g., models trained and selected using the operations of Figure 3 above, are used to predict, at a current time t₀, a predicted load for a future time t₁, e.g., one to two hours after the current time t₀. The prediction in this example is based on a set of historical load values 704. In some examples, the load parameter values may be electrical and/or thermal loading values for the electrical equipment. Electrical loading may be measured by a load current value. Moreover, in a transformer, a secondary current can be measured, and the electrical load of the transformer can be derived from the measured secondary current.

Thermal loading can be measured by a temperature value, corresponding to heat caused by electrical losses within the electrical equipment. In transformers, for example, temperature values can be obtained from different components, such as a top oil temperature for example, and together with the current load and thermal fingerprints of the individual transformer, can be used to estimate a future electrical load and/or future associated hot-spot temperature that can indicate a contribution of excess heat to aging of the transformer. Other parameters can be used to estimate operating temperature as well, including output power, primary current, etc. Accordingly, in some embodiments, the operations 600 may further include predicting at least one hot-spot temperature value for a component of the electrical equipment for the future time based on the predicted load parameter value (Block 604).

The operations 600 further include calculating an overload capability for the future time based on the predicted load parameter value (Block 606). In some examples, calculating the overload capability includes predicting at least one overload capacity value for the electrical equipment based on the predicted load parameter value (Block 608), for a time period subsequent to the future time. For example, as shown in Figure 7, different overload capacities 710A-710C can be calculated based on load parameter values and/or other factors such as ambient temperature, top oil level, thermal fingerprints, etc. For example, based on a predicted load parameter value 706 for a future time t₁, the transformer may be able to safely operate above full capacity 712 (i.e., 100%) for different amounts of time. For example, based on the predicted load parameter value 706, the transformer may have an overload capacity 710A of 135% for 30 minutes (e.g., until time t₂), an overload capacity 710B of 120% for one hour (e.g., until time t₃), 120% capacity for one hour, or an overload capacity 710C of 105% for two hours (e.g., until time t₃). In this manner, overload capabilities can be determined as a percentage indicative of an amount of additional load that can be withstood by a particular electrical apparatus for a particular amount of time without abnormally and/or extensively aging or damaging the electrical equipment.

Unlike some conventional overload capacity calculations, in which an overload capacity is calculated based on a directly measured load at a current time (e.g. current load 708 of Figure 7 at t₀), these and other embodiments permit future overload capacities (e.g., overload capacities 710A-710C) to be calculated based on highly accurate predicted load (e.g., predicted load parameter value 706 for future time t₁), before the actual load for the future time is known. This in turn provides operators and asset managers more time to plan and react to contingencies.

The operations 600 further include changing at least one parameter associated with the electrical equipment at the present time based on the calculated overload capability for the future time (Block 610). The operations 600 may also include operating the electrical equipment based at least in part on the at least one changed parameter (Block 612). For example, as discussed above, a cooling component of a transformer may be operated in response to the predicted load parameter value to change a temperature of at least one component of the electrical equipment prior to the future time. Changing the parameter and/or operating the electrical equipment may also include communicating with and/or providing an indication to the electrical equipment.

In some examples, the at least one machine learning model is trained based on a plurality of determined relationships between a predefined number of load parameter values and at least one subsequent load parameter value from a time series data stream obtained for a predetermined period of time. In this example, training is performed before deploying the machine learning model and may also happen continuously during operation as well.

In some examples, the plurality of determined relationships is validated based on a comparison of at least one expected load parameter value derived from the predefined number of load parameter values and the at least one subsequent load parameter value. For example, as discussed above with respect to Figures 2A-2B, predicting the load parameter value for the future time may be made successively using the predefined number of load parameter values as an input set to the at least one machine learning model. The input set may be successively generated with a moving window technique from the time series data stream of load parameter values. For example, the plurality of load parameter values may include a set of at least five load parameter values iteratively extracted from a stream of load parameter values obtained from the electrical equipment. The future time for the predicted load parameter value may also be at least one hour or more after the predicting.

In some examples, the at least one machine learning model predicts the load parameter value of the electrical equipment for the future time based only on the plurality of load parameter values. For example, as discussed above, a machine learning model can accurately predict future loads using a comparatively small set of historical load data, and without any additional input. In some examples, the machine learning model can also take known changes to the electrical equipment into account, such as performing a cooling operation in anticipation of an overload condition. For example, in some embodiments, the at least one machine learning model predicts the load parameter value of the electrical equipment for the future time based on the plurality of load parameter values and at least one temperature parameter associated with the electrical equipment.

The at least one machine learning model is accordingly trained with the data streams values of load parameter values, which may include actual measured load values, temperature values, etc., for prediction. The at least one machine learning model can be comprised within a device, for example a controller or a relay associated with the electrical equipment which is receiving the data streams values from the sensors connected to the electrical equipment and is capable to controlling or coordinating with other devices for performing at least one operation associated with the electrical equipment or comprised in a central monitoring system deployed in a substation or distribution management system used for managing a power system. For example, based on the prediction of future load parameter values and based on processing carried out to determine the overload condition at the future time, the device (e.g., controller/relay) can perform/coordinate cooling operation in anticipation of the future overload condition.

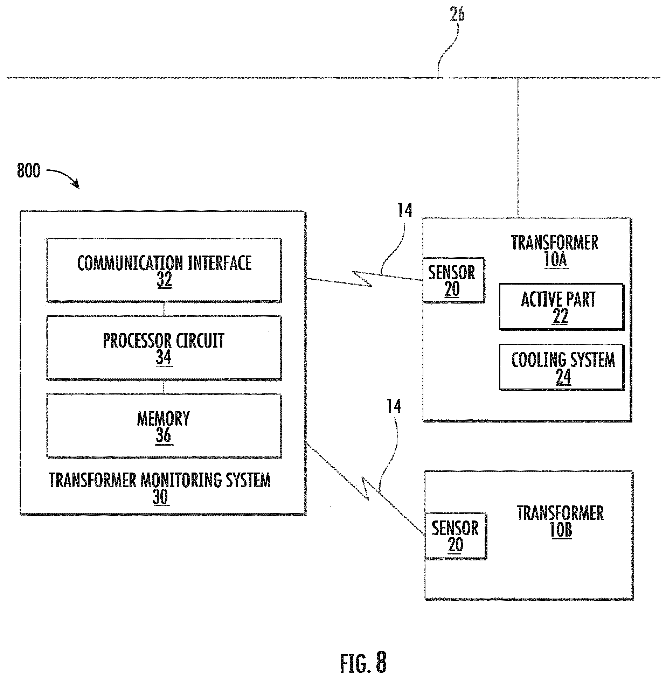

Figure 8 is a block diagram of a transformer load forecasting system 800 configured to perform operations disclosed herein, such as the operations 300 of Figure 3 and/or the operations 600 of Figure 6, for example. In the embodiment of Figure 8, a transformer monitoring system 30 of the load forecasting system 800 can monitor one or multiple transformers 10A, 10B. In some embodiments, the transformer monitoring system 30 is integrated within a transformer 10A provided as a device for monitoring and load forecasting and can be enabled to monitoring only the transformer 10A, while in other embodiments, the transformer monitoring system 30 can be integrated with the transformer 10A to monitor the transformer 10A and optionally also monitor or receive data from a neighboring one or more electrical equipment (e.g. transformer 10B or another power or current transformer or circuit breaker) or connected transmission/distribution line. In yet another embodiment, the transformer monitoring system 30 is separate from the transformers 10A, 10B being monitored.

The transformer monitoring system 30 includes a processor circuit 34, a communication interface 32 coupled to the processor circuit, and a memory 36 coupled to the processor circuit 34. The memory 36 includes machine-readable computer program instructions that, when executed by the processor circuit 34, cause the processor circuit 34 to perform some of the operations depicted and described herein, such as operations 600 as described above with respect to Figure 6, for example.

As shown, the load forecasting system 800 includes a communication interface 32 (also referred to as a network interface) configured to provide communications with other devices, e.g., with sensors 20 in the transformers 10A, 10B via a wired or wireless communication channel 14. The transformer monitoring system 30 may receive signals from the sensors 20 indicative of physical parameters of the transformers 10A, 10B, e.g., voltage, current, oil temperature, ambient temperature, etc., associated with the transformers 10A, 10B. One advantage of some embodiments is that the transformer monitoring system 30 may be a resource constrained device, because the machine learning algorithm(s) require fewer data and/or parameters to perform accurate load forecasting and prediction.

In this example, the transformer monitoring system 30 is depicted as a separate monitoring device that communicates with the transformers 10A, 10B circuit via communication channels 14, e.g., in a server-client model, cloud based platform, a substation automation system used in a substation, a distribution management system used for power system management, or other network arrangements. One advantage of a client-server configuration is overall optimization of load in a power system and/or substation can be achieved based on load forecasting and overload capacity calculations for a plurality of individual equipment, such as transformers 10A, 10B. For example, load management in a power system may include redistributing loads across different electrical equipment, based on the predicted load capabilities of the different electrical equipment. However, it should also be understood that, in other embodiments, the transformer monitoring system 30 may be part of the transformer 10A, 10B or other electrical equipment as desired. an also be working in client server model, where the client is associated with the electrical equipment making measurements and the server is running a machine learning algorithm and calculating overload capability.

In another embodiment of the server-client model, the transformer monitoring system can have a device (e.g., client) associated with the transformer being monitored, wherein the device comprises a machine learning model for load forecasting and a central system (e.g., server) is configured to monitor multiple electrical equipment/transformers. The server may also include an instance of the machine learning model comprised in the device associated with the transformer. The machine learning model in the server may be continuously trained for load forecasting with data received from the transformer or/and the multiple electrical equipment, with the server providing information/data (e.g. model coefficients) for tuning/adapting the machine learning model in the device that is derived from the continuously learning machine learning model in the server. The server may also be capable of performing simulation or advanced processing to forecast/simulate conditions in the transformer (e.g. hot spot determination based on electrical/thermal load information made available by the device or sensors connected to the transformer) and to provide information relating to such determination to the device (e.g., client) connected to the transformer to change at least one parameter (e.g. cooling) associated with the transformer (or other electrical equipment) by the device. According to various embodiments, the transformer monitoring system 30 may include electronic, computing and communication hardware and software for predicting load parameter values and performing at least one activity associated with the transformer.

The transformer monitoring system 30 also includes a processor circuit 34 (also referred to as a processor) and a memory circuit 36 (also referred to as memory) coupled to the processor circuit 34. According to other embodiments, processor circuit 34 may be defined to include memory so that a separate memory circuit is not required.

As discussed herein, operations of transformer monitoring system 30 and other aspects of the load forecasting system 800 may be performed by processor circuit 34 and/or communication interface 32. For example, the processor circuit 34 may control the communication interface 32 to transmit communications through the communication interface 32 to one or more other devices and/or to receive communications through network interface from one or more other devices. Moreover, modules may be stored in memory 36, and these modules may provide instructions so that when instructions of a module are executed by processor circuit 34, processor circuit 34 performs respective operations (e.g., operations discussed herein with respect to example embodiments). For example, modules may be further configured to manage fault detection, generate updated probabilities for different nodes, provide an interface (e.g., an application programming interface (API)) for managing, configuring and/or modifying the fault tree structure by a customer or other user, etc., as desired.

The transformer 10A, 10B, which may for example be a high voltage transformer, includes a sensor 20 that measures various quantities associated with the transformer 10A, 10B such as operating load, ambient temperature, moisture and/or oxygen content, and transmits the measurements via communication channel 14 to the transformer monitoring system 30. The transformer 10A, 10B may also include sub-systems, such as an active part 22 coupled to a power line 26 (e.g., an overhead power transmission line), cooling system 24 (e.g., for a transformer or reactor), etc., which may in turn be operated by or in response to instructions from the processor circuit 34 for example. In some examples, a similar monitoring system may be associated with the power line 26, or other components of the load forecasting system 800. In this and other examples, embodiments are described in a context of transformers for simplicity of illustration, but it should be understood that many other types of electrical equipment may benefit from the embodiments described herein, such as reactors, transmission lines, instrument transformers, generators etc., that are subjected to a load condition, and all such electrical equipment should also be contemplated as being within the scope of the present disclosure.

These measured quantities can be used by the transformer monitoring system 30 to detect and/or determine the presence of faults in various components or subsystems of the transformer 10A, 10B, and/or a general fault condition of the transformer 10A, 10B. The communication channel 14 may include a wired or wireless link, and in some embodiments may include a wireless local area network (WLAN) or cellular communication network, such as a 4G or 5G communication network.

The load forecasting system 800 may receive on-line or off-line measurements of operating load, temperature, moisture, oxygen content, etc. from the transformer 10A, 10B and process the measurements to detect and/or determine the presence of faults. The load forecasting system 800 may be implemented in a server, in a server cluster, a cloud-based remote server system, and/or a standalone device. Sensor data may be obtained by the load forecasting system 800 from one transformer and/or from multiple transformers.

A load forecasting system 700 as described herein may be implemented in many different ways. For example, a transformer monitoring system 30 according to some embodiments may receive online/offline data, and the received data used by a machine learning technique configured in the device for learning and classification to identify different patterns that can be considered for estimation/simulations described in various embodiments. The device may be connectable to one or more transformers 10 to receive measurement data.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items. The phrase "at least one of A and B" means "A or B" or "A and B".

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components, or functions but does not preclude the presence or addition of one or more other features, integers, elements, steps, components, functions, or groups thereof.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

## Claims

1. A method comprising:
predicting, by a processor circuit, a load parameter value of an electrical equipment for a future time based on at least one machine learning model and a plurality of load parameter values comprising a set of predefined number of load parameter values extracted from a time series data stream of load parameter values obtained for the electrical equipment,
wherein the at least one machine learning model is trained and selected using operations (300) based on historical load data, the operations (300) include
(302) breaking a dataset (402) of the historical load data into training data (404) and validation data (406),
(304) breaking the training data (404) into K random pieces (408),
(306) training a machine learning model with K-1 pieces of the training data (404),
(308) validating the machine learning model using the remaining piece of the training data (404),
(310) annotating the accuracy of the model,
(312) repeating the operations (306) to (310) for multiple different machine learning models,
(314) repeating the operations (306) to (310) for each set of K-1 pieces, for a total of K training and testing operations for each machine learning model,
(316) repeating the operations (304) to (314) for a different set of random K pieces of the training data,
(318) validating the trained machine learning models using the validation data (406), and
(320) selecting at least one most accurate machine learning model for use in the predicting; calculating, by the processor circuit, an overload capability for the future time based on the predicted load parameter value; and
changing, by the processor circuit, at least one parameter associated with the electrical equipment at the present time based on the calculated overload capability for the future time.

2. The method of claim 1, wherein the at least one machine learning model is trained based on a plurality of determined relationships between a predefined number of load parameter values and at least one subsequent load parameter value from a time series data stream obtained for a predetermined period of time.

3. The method of claim 2, wherein the plurality of determined relationships is validated based on a comparison of at least one expected load parameter value derived from the predefined number of load parameter values and the at least one subsequent load parameter value.

4. The method of any one of claims 1 to 3, wherein predicting the load parameter value for the future time is made successively using the predefined number of load parameter values as an input set to the at least one machine learning model, and
wherein the input set is successively generated with a moving window technique from the time series data stream of load parameter values.

5. The method of any one of claims 1 to 4, wherein the plurality of load parameter values comprises a set of at least five load parameter values iteratively extracted from a stream of load parameter values obtained from the electrical equipment.

6. The method of any one of claims 1 to 5, wherein the future time for the predicted load parameter value is at least one hour after the predicting.

7. The method of any one of claims 1 to 6, wherein the at least one machine learning model predicts the load parameter value of the electrical equipment for the future time based only on the plurality of load parameter values.

8. The method of any one of claims 1 to 7, wherein the at least one machine learning model predicts the load parameter value of the electrical equipment for the future time based on the plurality of load parameter values and at least one temperature parameter associated with the electrical equipment.

9. The method of any one of claims 1 to 8, further comprising predicting, by the processor circuit, at least one hot-spot temperature value for a component of the electrical equipment for the future time based on the predicted load parameter value.

10. The method of any one of claims 1 to 9, further comprising predicting, by the processor circuit, at least one overload capacity value for the electrical equipment based on the predicted load parameter value, the at least one overload capacity value associated with at least one time period subsequent to the future time.

11. The method of any one of claims 1 to 10, wherein the electrical equipment comprises a transformer, the method further comprising:
operating the transformer based at least in part on the at least one changed parameter.

12. The method of claim 11, wherein operating the transformer includes operating at least one cooling component of the transformer in response to the predicted load parameter value to change a temperature of at least one component of the electrical equipment prior to the future time.

13. A monitoring device comprising:
a processor circuit; and
a memory comprising machine readable instructions that, when executed by the processor circuit, cause the processor circuit to:
predict a load parameter value of an electrical equipment for a future time based on at least one machine learning model and a plurality of load parameter values comprising a set of predefined number of load parameter values extracted from a time series data stream of load parameter values obtained for the electrical equipment,
wherein the at least one machine learning model is trained and selected using operations (300) based on historical load data, the operations (300) include
(302) breaking a dataset (402) of the historical load data into training data (404) and validation data (406),
(304) breaking the training data (404) into K random pieces (408),
(306) training a machine learning model with K-1 pieces of the training data (404),
(308) validating the machine learning model using the remaining piece of the training data (404),
(310) annotating the accuracy of the model,
(312) repeating the operations (306) to (310) for multiple different machine learning models,
(314) repeating the operations (306) to (310) for each set of K-1 pieces, for a total of K training and testing operations for each machine learning model,
(316) repeating the operations (304) to (314) for a different set of random K pieces of the training data,
(318) validating the trained machine learning models using the validation data (406), and
(320) selecting at least one most accurate machine learning model for use in the predicting;
calculate an overload capability for the future time based on the predicted load parameter value; and
change at least one parameter associated with the electrical equipment at the present time based on the calculated overload capability for the future time.

14. The monitoring device of claim 13, wherein the at least one machine learning model is trained based on a plurality of determined relationships between a predefined number of load parameter values and at least one subsequent load parameter value from a time series data stream obtained for a predetermined period of time.

15. The monitoring device of claim 13 or 14, wherein the plurality of load parameter values comprises a set of at least five load parameter values iteratively extracted from a stream of load parameter values obtained from the electrical equipment.

16. The monitoring device of any one of claims 13 to 15, wherein the future time for the predicted load parameter value is at least one hour after the predicting.

17. A non-transitory computer readable medium comprising instructions that, when executed by a processor circuit, cause the processor circuit to:
predict a load parameter value of an electrical equipment for a future time based on at least one machine learning model and a plurality of load parameter values comprising a set of predefined number of load parameter values extracted from a time series data stream of load parameter values obtained for the electrical equipment,
wherein the at least one machine learning model is trained and selected using operations (300) based on historical load data, the operations (300) include
(302) breaking a dataset (402) of the historical load data into training data (404) and validation data (406),
(304) breaking the training data (404) into K random pieces (408),
(306) training a machine learning model with K-1 pieces of the training data (404),
(308) validating the machine learning model using the remaining piece of the training data (404),
(310) annotating the accuracy of the model,
(312) repeating the operations (306) to (310) for multiple different machine learning models,
(314) repeating the operations (306) to (310) for each set of K-1 pieces, for a total of K training and testing operations for each machine learning model,
(316) repeating the operations (304) to (314) for a different set of random K pieces of the training data,
(318) validating the trained machine learning models using the validation data (406), and
(320) selecting at least one most accurate machine learning model for use in the predicting;
calculate an overload capability for the future time based on the predicted load parameter value; and
change at least one parameter associated with the electrical equipment at the present time based on the calculated overload capability for the future time.

18. The computer readable medium of claim 17, wherein the at least one machine learning model is trained based on a plurality of determined relationships between a predefined number of load parameter values and at least one subsequent load parameter value from a time series data stream obtained for a predetermined period of time.

19. The computer readable medium of claim 17 or 18, wherein the plurality of load parameter values comprises a set of at least five load parameter values iteratively extracted from a stream of load parameter values obtained from the electrical equipment.

20. The computer readable medium of any one of claims 17 to 19, wherein the future time for the predicted load parameter value is at least one hour after the predicting.

## Patentansprüche

1. Ein Verfahren, umfassend:
Vorhersagen eines Lastparameterwerts einer elektrischen Ausrüstung für eine zukünftige Zeit durch eine Prozessorschaltung basierend auf mindestens einem Modell für maschinelles Lernen und einer Mehrzahl von Lastparameterwerten, die einen Satz einer vordefinierten Anzahl von Lastparameterwerten umfasst, die aus einem Zeitreihendatenstrom von Lastparameterwerten extrahiert wird, die für die elektrische Ausrüstung erhalten werden, wobei das mindestens eine Modell für maschinelles Lernen unter Verwendung von Operationen (300) basierend auf historischen Lastdaten trainiert und ausgewählt wird, wobei die Operationen (300) Folgendes beinhalten:
(302) Zerlegen eines Datensatzes (402) der historischen Lastdaten in Trainingsdaten (404) und Validierungsdaten (406),
(304) Zerlegen der Trainingsdaten (404) in K zufällige Teile (408),
(306) Trainieren eines Modells für maschinelles Lernen mit K - 1 Teilen der Trainingsdaten (404),
(308) Validieren des Modells für maschinelles Lernen unter Verwendung des verbleibenden Teils der Trainingsdaten (404),
(310) Annotieren der Genauigkeit des Modells,
(312) Wiederholen der Operationen (306) bis (310) für mehrere verschiedene Modelle für maschinelles Lernen,
(314) Wiederholen der Operationen (306) bis (310) für jeden Satz von K - 1 Teilen für insgesamt K Trainings-und Testoperationen für jedes Modell für maschinelles Lernen,
(316) Wiederholen der Operationen (304) bis (314) für einen anderen Satz von K zufälligen Teilen der Trainingsdaten,
(318) Validieren der trainierten Modelle für maschinelles Lernen unter Verwendung der Validierungsdaten (406), und (320) Auswählen mindestens eines genauesten Modells für maschinelles Lernen zur Verwendung bei der Vorhersage;
Berechnen einer Überlastfähigkeit für die zukünftige Zeit durch die Prozessorschaltung basierend auf dem vorhergesagten Lastparameterwert; und
Ändern mindestens eines Parameters, der mit der elektrischen Ausrüstung zur gegenwärtigen Zeit assoziiert ist, durch die Prozessorschaltung basierend auf der berechneten Überlastfähigkeit für die zukünftige Zeit.

2. Das Verfahren nach Anspruch 1, wobei das mindestens eine Modell für maschinelles Lernen basierend auf einer Mehrzahl von bestimmten Beziehungen zwischen einer vordefinierten Anzahl von Lastparameterwerten und mindestens einem nachfolgenden Lastparameterwert aus einem Zeitreihendatenstrom trainiert wird, der für eine vorbestimmte Zeitdauer erhalten wird.

3. Das Verfahren nach Anspruch 2, wobei die Mehrzahl von bestimmten Beziehungen basierend auf einem Vergleich mindestens eines erwarteten Lastparameterwerts validiert wird, der aus der vordefinierten Anzahl von Lastparameterwerten und dem mindestens einen nachfolgenden Lastparameterwert abgeleitet wird.

4. Das Verfahren nach einem der Ansprüche 1 bis 3, wobei das Vorhersagen des Lastparameterwerts für die zukünftige Zeit sukzessive unter Verwendung der vordefinierten Anzahl von Lastparameterwerten als Eingabesatz in das mindestens eine Modell für maschinelles Lernen erfolgt, und
wobei der Eingabesatz sukzessive mit einer Gleitfenstertechnik aus dem Zeitreihendatenstrom von Lastparameterwerten erzeugt wird.

5. Das Verfahren nach einem der Ansprüche 1 bis 4, wobei die Mehrzahl von Lastparameterwerten einen Satz von mindestens fünf Lastparameterwerten umfasst, die iterativ aus einem Strom von Lastparameterwerten extrahiert werden, die von der elektrischen Ausrüstung erhalten werden.

6. Das Verfahren nach einem der Ansprüche 1 bis 5, wobei die zukünftige Zeit für den vorhergesagten Lastparameterwert mindestens eine Stunde nach der Vorhersage ist.

7. Das Verfahren nach einem der Ansprüche 1 bis 6, wobei das mindestens eine Modell für maschinelles Lernen den Lastparameterwert der elektrischen Ausrüstung für die zukünftige Zeit nur basierend auf der Mehrzahl von Lastparameterwerten vorhersagt.

8. Das Verfahren nach einem der Ansprüche 1 bis 7, wobei das mindestens eine Modell für maschinelles Lernen den Lastparameterwert der elektrischen Ausrüstung für die zukünftige Zeit basierend auf der Mehrzahl von Lastparameterwerten und mindestens einem mit der elektrischen Ausrüstung assoziierten Temperaturparameter vorhersagt.

9. Das Verfahren nach einem der Ansprüche 1 bis 8, ferner umfassend Vorhersagen mindestens eines Hotspot-Temperaturwerts für eine Komponente der elektrischen Ausrüstung für die zukünftige Zeit durch die Prozessorschaltung basierend auf dem vorhergesagten Lastparameterwert.

10. Das Verfahren nach einem der Ansprüche 1 bis 9, ferner umfassend Vorhersagen mindestens eines Überlastkapazitätswerts für die elektrische Ausrüstung durch die Prozessorschaltung basierend auf dem vorhergesagten Lastparameterwert, wobei der mindestens eine Überlastkapazitätswert mit mindestens einer Zeitdauer nach der zukünftigen Zeit assoziiert ist.

11. Das Verfahren nach einem der Ansprüche 1 bis 10, wobei die elektrische Ausrüstung einen Transformator umfasst, wobei das Verfahren ferner Folgendes umfasst:
Betreiben des Transformators zumindest teilweise basierend auf dem mindestens einen geänderten Parameter.

12. Das Verfahren nach Anspruch 11, wobei das Betreiben des Transformators Betreiben mindestens einer Kühlkomponente des Transformators in Reaktion auf den vorhergesagten Lastparameterwert beinhaltet, um eine Temperatur mindestens einer Komponente der elektrischen Ausrüstung vor der zukünftigen Zeit zu ändern.

13. Eine Überwachungsvorrichtung, umfassend:
eine Prozessorschaltung; und
einen Speicher, der maschinenlesbare Anweisungen umfasst, die, wenn sie von der Prozessorschaltung ausgeführt werden, die Prozessorschaltung zu Folgendem veranlassen:
Vorhersagen eines Lastparameterwerts einer elektrischen Ausrüstung für eine zukünftige Zeit basierend auf mindestens einem Modell für maschinelles Lernen und einer Mehrzahl von Lastparameterwerten, die einen Satz einer vordefinierten Anzahl von Lastparameterwerten umfasst, die aus einem Zeitreihendatenstrom von Lastparameterwerten extrahiert wird, die für die elektrische Ausrüstung erhalten werden,
wobei das mindestens eine Modell für maschinelles Lernen unter Verwendung von Operationen (300) basierend auf historischen Lastdaten trainiert und ausgewählt wird, wobei die Operationen (300) Folgendes beinhalten:
(302) Zerlegen eines Datensatzes (402) der historischen Lastdaten in Trainingsdaten (404) und Validierungsdaten (406),
(304) Zerlegen der Trainingsdaten (404) in K zufällige Teile (408),
(306) Trainieren eines Modells für maschinelles Lernen mit K - 1 Teilen der Trainingsdaten (404),
(308) Validieren des Modells für maschinelles Lernen unter Verwendung des verbleibenden Teils der Trainingsdaten (404),
(310) Annotieren der Genauigkeit des Modells,
(312) Wiederholen der Operationen (306) bis (310) für mehrere verschiedene Modelle für maschinelles Lernen,
(314) Wiederholen der Operationen (306) bis (310) für jeden Satz von K - 1 Teilen für insgesamt K Trainings- und Testoperationen für jedes Modell für maschinelles Lernen,
(316) Wiederholen der Operationen (304) bis (314) für einen anderen Satz von K zufälligen Teilen der Trainingsdaten,
(318) Validieren der trainierten Modelle für maschinelles Lernen unter Verwendung der Validierungsdaten (406), und (320) Auswählen mindestens eines genauesten Modells für maschinelles Lernen zur Verwendung bei der Vorhersage;
Berechnen einer Überlastfähigkeit für die zukünftige Zeit basierend auf dem vorhergesagten Lastparameterwert; und Ändern mindestens eines Parameters, der mit der elektrischen Ausrüstung zur gegenwärtigen Zeit assoziiert ist, basierend auf der berechneten Überlastfähigkeit für die zukünftige Zeit.

14. Die Überwachungsvorrichtung nach Anspruch 13, wobei das mindestens eine Modell für maschinelles Lernen basierend auf einer Mehrzahl von bestimmten Beziehungen zwischen einer vordefinierten Anzahl von Lastparameterwerten und mindestens einem nachfolgenden Lastparameterwert aus einem Zeitreihendatenstrom trainiert wird, der für eine vorbestimmte Zeitdauer erhalten wird.

15. Die Überwachungsvorrichtung nach Anspruch 13 oder 14, wobei die Mehrzahl von Lastparameterwerten einen Satz von mindestens fünf Lastparameterwerten umfasst, die iterativ aus einem Strom von Lastparameterwerten extrahiert werden, die von der elektrischen Ausrüstung erhalten werden.

16. Die Überwachungsvorrichtung nach einem der Ansprüche 13 bis 15, wobei die zukünftige Zeit für den vorhergesagten Lastparameterwert mindestens eine Stunde nach dem Vorhersagen ist.

17. Ein nichtflüchtiges computerlesbares Medium, umfassend Anweisungen, die, wenn sie von einer Prozessorschaltung ausgeführt werden, die Prozessorschaltung zu Folgendem veranlassen:
Vorhersagen eines Lastparameterwerts einer elektrischen Ausrüstung für eine zukünftige Zeit basierend auf mindestens einem Modell für maschinelles Lernen und einer Mehrzahl von Lastparameterwerten, die einen Satz einer vordefinierten Anzahl von Lastparameterwerten umfasst, die aus einem Zeitreihendatenstrom von Lastparameterwerten extrahiert wird, die für die elektrische Ausrüstung erhalten werden,
wobei das mindestens eine Modell für maschinelles Lernen unter Verwendung von Operationen (300) basierend auf historischen Lastdaten trainiert und ausgewählt wird,
wobei die Operationen (300) Folgendes beinhalten:
(302) Zerlegen eines Datensatzes (402) der historischen Lastdaten in Trainingsdaten (404) und Validierungsdaten (406),
(304) Zerlegen der Trainingsdaten (404) in K zufällige Teile (408),
(306) Trainieren eines Modells für maschinelles Lernen mit K - 1 Teilen der Trainingsdaten (404),
(308) Validieren des Modells für maschinelles Lernen unter Verwendung des verbleibenden Teils der Trainingsdaten (404),
(310) Annotieren der Genauigkeit des Modells,
(312) Wiederholen der Operationen (306) bis (310) für mehrere verschiedene Modelle für maschinelles Lernen,
(314) Wiederholen der Operationen (306) bis (310) für jeden Satz von K - 1 Teilen für insgesamt K Trainings- und Testoperationen für jedes Modell für maschinelles Lernen,
(316) Wiederholen der Operationen (304) bis (314) für einen anderen Satz von K zufälligen Teilen der Trainingsdaten,
(318) Validieren der trainierten Modelle für maschinelles Lernen unter Verwendung der Validierungsdaten (406), und (320) Auswählen mindestens eines genauesten Modells für maschinelles Lernen zur Verwendung bei der Vorhersage;
Berechnen einer Überlastfähigkeit für die zukünftige Zeit basierend auf dem vorhergesagten Lastparameterwert; und
Ändern mindestens eines Parameters, der mit der elektrischen Ausrüstung zur gegenwärtigen Zeit assoziiert ist, basierend auf der berechneten Überlastfähigkeit für die zukünftige Zeit.

18. Das computerlesbare Medium nach Anspruch 17, wobei das mindestens eine Modell für maschinelles Lernen basierend auf einer Mehrzahl von bestimmten Beziehungen zwischen einer vordefinierten Anzahl von Lastparameterwerten und mindestens einem nachfolgenden Lastparameterwert aus einem Zeitreihendatenstrom trainiert wird, der für eine vorbestimmte Zeitdauer erhalten wird.

19. Das computerlesbare Medium nach Anspruch 17 oder 18, wobei die Mehrzahl von Lastparameterwerten einen Satz von mindestens fünf Lastparameterwerten umfasst, die iterativ aus einem Strom von Lastparameterwerten extrahiert werden, die von der elektrischen Ausrüstung erhalten werden.

20. Das computerlesbare Medium nach einem der Ansprüche 17 bis 19, wobei die zukünftige Zeit für den vorhergesagten Lastparameterwert mindestens eine Stunde nach der Vorhersage ist.

## Revendications

1. Un procédé comprenant les étapes suivantes :
prédire, par un circuit de traitement, une valeur de paramètre de charge d'un équipement électrique pendant un temps futur sur la base d'au moins un modèle d'apprentissage automatique et d'une pluralité de valeurs de paramètre de charge comprenant un ensemble d'un nombre prédéfini de valeurs de paramètre de charge extraites d'un flux de données de série temporelle de valeurs de paramètre de charge obtenues pour l'équipement électrique,
où l'au moins un modèle d'apprentissage automatique est entraîné et sélectionné en utilisant des opérations (300) sur la base de données de charge historiques, les opérations (300) comprenant
(302) la division d'un ensemble de données (402) des données historiques de charge en données d'entrainement (404) et données de validation (406),
(304) la division des données d'entraînement (404) en K sous-ensembles aléatoires (408),
(306) l'entraînement d'un modèle d'apprentissage automatique à l'aide de K-1 sous-ensembles des données d'entraînement (404),
(308) la validation du modèle d'apprentissage automatique à l'aide du sous-ensemble restant des données d'entraînement (404),
(310) l'annotation de la précision du modèle,
(312) la répétition des opérations (306) à (310) pour plusieurs modèles d'apprentissage automatique différents,
(314) la répétition des opérations (306) à (310) pour chaque jeu de K-1 sous-ensembles, pour un total de K opérations d'entraînement et de test pour chaque modèle d'apprentissage automatique,
(316) la répétition des opérations (304) à (314) pour un jeu différent de K sous-ensembles aléatoires des données d'entraînement,
(318) la validation des modèles d'apprentissage automatique entraînés à l'aide des données de validation (406), et
(320) la sélection d'au moins un modèle d'apprentissage automatique le plus précis à utiliser dans la prédiction ; le calcul, par le circuit de processeur, d'une capacité de surcharge pour le temps futur sur la base de la valeur de paramètre de charge prédite ; et
la modification, par le circuit de processeur, d'au moins un paramètre associé à l'équipement électrique à l'instant présent sur la base de la capacité de surcharge calculée pour l'instant futur.

2. Le procédé selon la revendication 1, dans lequel l'au moins un modèle d'apprentissage automatique est entraîné sur la base d'une pluralité de relations déterminées entre un nombre prédéfini de valeurs de paramètre de charge et au moins une valeur de paramètre de charge suivante à partir d'un flux de données de série temporelle obtenu pendant une période de temps prédéterminée.

3. Le procédé selon la revendication 2, dans lequel la pluralité de relations déterminées sont validées sur la base d'une comparaison d'au moins une valeur de paramètre de charge attendue dérivée du nombre prédéfini de valeurs de paramètre de charge et de l'au moins une valeur de paramètre de charge suivante.

4. Le procédé selon l'une quelconque des revendications 1 à 3, dans lequel la prédiction de la valeur de paramètre de charge pour le temps futur est effectuée successivement en utilisant le nombre prédéfini de valeurs de paramètre de charge comme un ensemble d'entrée pour l'au moins un modèle d'apprentissage automatique, et
dans lequel l'ensemble d'entrée est généré successivement au moyen d'une technique de fenêtre mobile à partir du flux de données de série temporelle de valeurs de paramètre de charge.

5. Le procédé selon l'une quelconque des revendications 1 à 4, dans lequel la pluralité de valeurs de paramètre de charge comprend un ensemble d'au moins cinq valeurs de paramètre de charge extraites de manière itérative d'un flux de valeurs de paramètre de charge obtenues de l'équipement électrique.

6. Le procédé selon l'une quelconque des revendications 1 à 5, dans lequel le temps futur pour la valeur de paramètre de charge prédite est au moins une heure après la prédiction.

7. Le procédé selon l'une quelconque des revendications 1 à 6, dans lequel l'au moins un modèle d'apprentissage automatique prédit la valeur de paramètre de charge de l'équipement électrique pour le temps futur sur la base uniquement de la pluralité de valeurs de paramètre de charge.

8. Le procédé selon l'une quelconque des revendications 1 à 7, dans lequel l'au moins un modèle d'apprentissage automatique prédit la valeur de paramètre de charge de l'équipement électrique pour le temps futur sur la base de la pluralité de valeurs de paramètre de charge et d'au moins un paramètre de température associé à l'équipement électrique.

9. Le procédé selon l'une quelconque des revendications 1 à 8, comprenant en outre de prédire, par le circuit de processeur, au moins une valeur de température de point chaud pour un composant de l'équipement électrique pour le temps futur sur la base de la valeur de paramètre de charge prédite.

10. Le procédé selon l'une quelconque des revendications 1 à 9, comprenant en outre de prédire, par le circuit de processeur, au moins une valeur de capacité de surcharge pour l'équipement électrique sur la base de la valeur de paramètre de charge prédite, l'au moins une valeur de capacité de surcharge étant associée à au moins une période de temps postérieure au temps futur.

11. Le procédé selon l'une quelconque des revendications 1 à 10, dans lequel l'équipement électrique comprend un transformateur, le procédé comprenant en outre l'étape suivante :
faire fonctionner le transformateur sur la base, au moins en partie, de l'au moins un paramètre modifié.

12. Le procédé selon la revendication 11, dans lequel faire fonctionner le transformateur comprend de faire fonctionner au moins un composant de refroidissement du transformateur en réponse à la valeur de paramètre de charge prédite pour modifier la température d'au moins un composant de l'équipement électrique avant le temps futur.

13. Un dispositif de surveillance comprenant :
un circuit de processeur ; et
une mémoire comprenant des instructions lisibles par ordinateur qui, lorsqu'elles sont exécutées par le circuit de processeur, amènent le circuit de processeur à :
prédire une valeur de paramètre de charge d'un équipement électrique pendant un temps futur sur la base d'au moins un modèle d'apprentissage automatique et d'une pluralité de valeurs de paramètre de charge comprenant un ensemble d'un nombre prédéfini de valeurs de paramètre de charge extraites d'un flux de données de série temporelle de valeurs de paramètre de charge obtenues pour l'équipement électrique,
où l'au moins un modèle d'apprentissage automatique est entraîné et sélectionné en utilisant des opérations (300) sur la base de données de charge historiques, les opérations (300) comprenant
(302) la division d'un ensemble de données (402) des données historiques de charge en données d'entrainement (404) et données de validation (406),
(304) la division des données d'entraînement (404) en K sous-ensembles aléatoires (408),
(306) l'entraînement d'un modèle d'apprentissage automatique à l'aide de K-1 sous-ensembles des données d'entraînement (404),
(308) la validation du modèle d'apprentissage automatique à l'aide du sous-ensemble restant des données d'entraînement (404),
(310) l'annotation de la précision du modèle,
(312) la répétition des opérations (306) à (310) pour plusieurs modèles d'apprentissage automatique différents,
(314) la répétition des opérations (306) à (310) pour chaque jeu de K-1 sous-ensembles, pour un total de K opérations d'entraînement et de test pour chaque modèle d'apprentissage automatique,
(316) la répétition des opérations (304) à (314) pour un jeu différent de K sous-ensembles aléatoires des données d'entraînement,
(318) la validation des modèles d'apprentissage automatique entraînés à l'aide des données de validation (406), et
(320) la sélection d'au moins un modèle d'apprentissage automatique le plus précis pour une utilisation dans la prédiction ;
calculer une capacité de surcharge pour le temps futur sur la base de la valeur de paramètre de charge prédite ; et
modifier au moins un paramètre associé à l'équipement électrique à l'instant présent sur la base de la capacité de surcharge calculée pour l'instant futur.

14. Le dispositif de surveillance selon la revendication 13, dans lequel l'au moins un modèle d'apprentissage automatique est entraîné sur la base d'une pluralité de relations déterminées entre un nombre prédéfini de valeurs de paramètre de charge et au moins une valeur de paramètre de charge suivante à partir d'un flux de données de série temporelle obtenu pendant une période de temps prédéterminée.

15. Le dispositif de surveillance selon la revendication 13 ou la revendication 14, dans lequel la pluralité de valeurs de paramètre de charge comprend un ensemble d'au moins cinq valeurs de paramètre de charge extraites de manière itérative d'un flux de valeurs de paramètre de charge obtenues de l'équipement électrique.

16. Le dispositif de surveillance selon l'une quelconque des revendications 13 à 15, dans lequel le temps futur pour la valeur de paramètre de charge prédite est au moins une heure après la prédiction.

17. Un support non transitoire lisible par ordinateur comprenant des instructions qui, lorsqu'elles sont exécutées par un circuit de processeur, amènent le circuit de processeur à :
prédire une valeur de paramètre de charge d'un équipement électrique pendant un temps futur sur la base d'au moins un modèle d'apprentissage automatique et d'une pluralité de valeurs de paramètre de charge comprenant un ensemble d'un nombre prédéfini de valeurs de paramètre de charge extraites d'un flux de données de série temporelle de valeurs de paramètre de charge obtenues pour l'équipement électrique,
où l'au moins un modèle d'apprentissage automatique est entraîné et sélectionné en utilisant des opérations (300) sur la base de données de charge historiques, les opérations (300) comprenant
(302) la division d'un ensemble de données (402) des données historiques de charge en données d'entrainement (404) et données de validation (406),
(304) la division des données d'entraînement (404) en K sous-ensembles aléatoires (408),
(306) l'entraînement d'un modèle d'apprentissage automatique à l'aide de K-1 sous-ensembles des données d'entraînement (404),
(308) la validation du modèle d'apprentissage automatique à l'aide du sous-ensemble restant des données d'entraînement (404),
(310) l'annotation de la précision du modèle,
(312) la répétition des opérations (306) à (310) pour plusieurs modèles d'apprentissage automatique différents,
(314) la répétition des opérations (306) à (310) pour chaque jeu de K-1 sous-ensembles, pour un total de K opérations d'entraînement et de test pour chaque modèle d'apprentissage automatique,
(316) la répétition des opérations (304) à (314) pour un jeu différent de K sous-ensembles aléatoires des données d'entraînement,
(318) la validation des modèles d'apprentissage automatique entraînés à l'aide des données de validation (406), et
(320) la sélection d'au moins un modèle d'apprentissage automatique le plus précis pour une utilisation dans la prédiction ;
calculer une capacité de surcharge pour le temps futur sur la base de la valeur de paramètre de charge prédite ; et
modifier au moins un paramètre associé à l'équipement électrique à l'instant présent sur la base de la capacité de surcharge calculée pour l'instant futur.

18. Le support lisible par ordinateur selon la revendication 17, dans lequel l'au moins un modèle d'apprentissage automatique est entraîné sur la base d'une pluralité de relations déterminées entre un nombre prédéfini de valeurs de paramètre de charge et au moins une valeur de paramètre de charge suivante à partir d'un flux de données de série temporelle obtenu pendant une période de temps prédéterminée.

19. Le support lisible par ordinateur selon la revendication 17 ou la revendication 18, dans lequel la pluralité de valeurs de paramètre de charge comprend un ensemble d'au moins cinq valeurs de paramètre de charge extraites de manière itérative d'un flux de valeurs de paramètre de charge obtenues de l'équipement électrique.

20. Le support lisible par ordinateur selon l'une quelconque des revendications 17 à 19, dans lequel le temps futur pour la valeur de paramètre de charge prédite est au moins une heure après la prédiction.
